# EUROPÄISCHE PATENTSCHRIFT

(11) **EP 3 464 004 B1**
(45) Veröffentlichungstag und Bekanntmachung des Hinweises auf die Patenterteilung: **03.11.2021**
(21) Anmeldenummer: 17715122.2
(22) Anmeldetag: 31.03.2017
(51) Int. Cl.: B60W 30/165, B60T 7/22, G08G 1/16

(54) **VERFAHREN UND VORRICHTUNG ZUR LÄNGSDYNAMIKREGELUNG BEI EINEM KRAFTFAHRZEUG WÄHREND EINES AUTONOMEN FAHRVORGANGS**
METHOD AND APPARATUS FOR LONGITUDINAL DYNAMIC REGULATION IN A MOTOR VEHICLE DURING AN AUTONOMOUS DRIVING OPERATION
PROCÉDÉ ET DISPOSITIF DE RÉGULATION DE LA DYNAMIQUE LONGITUDINALE D'UN VÉHICULE À MOTEUR PENDANT UN PROCESSUS DE CONDUITE AUTONOME

(30) Priorität: 02.06.2016 DE 102016209733
(43) Veröffentlichungstag der Anmeldung: 10.04.2019
(73) Patentinhaber: Robert Bosch GmbH, 70442 Stuttgart (DE)
(72) Erfinder: SCHMIDT, Thomas, 74321 Bietigheim-Bissingen (DE); STREHLE, Alfred, 70736 Fellbach (DE); DIEKMANN, Christoph, 74354 Besigheim (DE)
(86) Internationale Anmeldenummer: PCT/EP2017/057748
(87) Internationale Veröffentlichungsnummer: WO 2017/207133

(56) Entgegenhaltungen:
- EP-A1- 1 344 672
- WO-A1-2012/020297
- DE-A1-102006 060 905
- DE-A1-102011 116 112
- DE-A1-102012 203 182
- DE-A1-102013 007 857

## Beschreibung

### Stand der Technik

Die DE 10 2014 209 015 A1 offenbart ein Verfahren zur Abstandsregelung für ein Fahrzeug, wobei das Fahrzeug eine Bilderfassungseinrichtung und eine Umfeldsensorik aufweist, wobei die Umfeldsensorik ein Umfeldsignal bereitstellt, das eine Positionsinformation und/oder eine Geschwindigkeitsinformation für zumindest ein vorausfahrendes Fahrzeug repräsentiert, wobei das Verfahren einen Schritt des Einlesens einer Bildinformation der Bilderfassungseinrichtung umfasst, einen Schritt des Ermittelns zumindest einer Umfeldinformation unter Verwendung der Bildinformation sowie einen Schritt des Bestimmens eines Abstandsregelsignals unter Verwendung von dem Umfeldsignal und unter Verwendung der Umfeldinformation, um eine Abstandsregelung für das Fahrzeug zu realisieren.

Die DE 10 2006 060 905 A1 offenbart ein Verfahren zur Unterstützung der Längsführung eines Egofahrzeugs, wobei ein Geschwindigkeitsverzögerungswert des vorausfahrenden Fahrzeugs an das Egofahrzeug zur Verbesserung der Längsführung übermittelt wird.

Die WO2012/020297 A1 offenbart ein Verfahren zur Nachfahrsteuerung, das die maximale Verzögerung des vorausfahrenden Fahrzeugs berücksichtigt.

### Offenbarung der Erfindung

Die Erfindung betrifft ein Verfahren zur Längsdynamikregelung bei einem Kraftfahrzeug während eines autonomen Fahrvorgangs, bei dem
- mittels einer Umfeldsensorik das Vorhandensein eines dem Kraftfahrzeug vorausfahrenden Vorderfahrzeugs ermittelt wird
- mittels der Umfeldsensorik wenigstens eine die Fahrzeuglängsdynamik des Vorderfahrzeugs beschreibende Vorderfahrzeuglängsdynamikgröße ermittelt wird und
- abhängig von der Vorderfahrzeuglängsdynamikgröße wenigstens eine Größe ermittelt wird, welche in ein Bremsenregelungssystem des Kraftfahrzeugs eingeht.

Durch die Auswertung der Fahrdynamik eines vorausfahrenden Fahrzeugs stehen einem Bremsregelungssystem Daten zur Optimierung von dessen Bremseingriffen zur Verfügung. Diese Zusatzdaten sind insbesondere dann wichtig, wenn es sich beim Bremsregelungssystem um ein sekundäres System handelt, welches lediglich bei einem Ausfall oder Defekt vom Primärsystem und von dessen Sensorsignalen zur Anwendung kommt und dann zumindest eine sichere Notbremsung gewährleisten muss.

Erfindungsgemäß handelt es sich bei der Vorderfahrzeuglängsdynamikgröße um die Längsverzögerung des Vorderfahrzeugs. Diese Größe ist deshalb besonders wichtig, weil sie die für Bremsvorgänge entscheidende Längsdynamik des Fahrzeugs betrifft.

Erfindungsgemäß handelt es sich bei der wenigstens einen in das Bremsenregelungssystem des Kraftfahrzeugs eingehenden Größe um einen Längsverzögerungsgrenzwert für die ohne ein Blockieren der Räder realisierbare Längsverzögerung des Kraftfahrzeugs, wobei mittels des Bremsenregelungssystems ein fahrerunabhängiger Eingriff in die Längsdynamik des Kraftfahrzeugs derart durchgeführt wird, dass der Längsverzögerungsgrenzwert nicht überschritten wird. Diese Ausgestaltung beruht auf der Annahme, dass das Kraftfahrzeug zumindest genauso stark wie ein vorausfahrendes Fahrzeug verzögert werden kann. Dadurch wird die Durchführung einer sicheren Notbremsung ermöglicht.

Die Erfindung ist dadurch gekennzeichnet, dass ein auf die Räder des Kraftfahrzeugs wirkendes Bremsmoment mit einer ersten Aufbaurate solange aufgebaut wird, bis die Verzögerung des Kraftfahrzeugs den ermittelten Längsverzögerungsgrenzwert erreicht und dass anschließend das Bremsmoment mit einer zweiten Aufbaurate weiter erhöht wird, wobei die zweite Aufbaurate kleiner als die erste Aufbaurate ist. Ohne Kenntnis des Fahrbahnreibwerts ist eine stärkere Verzögerung gegenüber derjenigen des Vorderfahrzeugs mit einer erhöhten Gefahr blockierender Räder verbunden, deshalb sollte bei Erreichen des Längsverzögerungsgrenzwertes nur noch ein langsamer Bremskraftaufbau erfolgen.

Eine vorteilhafte Ausgestaltung der Erfindung ist dadurch gekennzeichnet, dass es sich bei dem mittels des Bremsenregelungssystems durchgeführten fahrerunabhängigen Eingriff um eine zum Fahrzeugstillstand führende Bremsung handelt. Damit gewinnt bei einem autonom bzw. automatisiert fahrenden Fahrzeug der Fahrer Zeit, die Kontrolle über das Fahrzeug zu übernehmen.

Eine vorteilhafte Ausgestaltung der Erfindung ist dadurch gekennzeichnet, dass es sich bei dem Bremsenregelungssystem des Kraftfahrzeugs um ein für einen Notbetrieb vorgesehenes sekundäres Bremsenregelungssystem handelt, welches aktiviert wird, wenn ein für den Normalbetrieb des Kraftfahrzeugs vorgesehenes Bremsenregelungssystem ausfällt.

Eine vorteilhafte Ausgestaltung der Erfindung ist dadurch gekennzeichnet, dass es sich die dem sekundären Bremsenregelungssystem um ein einkanaliges System handelt. Damit sind bei geringeren Kosten bereits die wichtigsten Funktionalitäten gewährleistet.

Eine vorteilhafte Ausgestaltung der Erfindung ist dadurch gekennzeichnet, dass es sich bei der Umfeldsensorik um eine Video- oder Radarsensorik handelt. Derartige Sensorsysteme sind in zahlreichen modernen Fahrzeugen bereits verbreitet.

Eine vorteilhafte Ausgestaltung der Erfindung ist dadurch gekennzeichnet, dass es sich bei der Umfeldsensorik um eine Sensorik handelt, welche von dem vorausfahrenden Fahrzeug auf drahtlosem Wege Informationen über dessen aktuelle Fahrzeugverzögerung oder dessen aktuelle Position empfängt. Die Fahrzeugposition kann dabei insbesondere über ein GPS-System ermittelt werden. Die GPS-Position des vorausfahrenden Fahrzeugs kann dabei in die Ermittlung von dessen Fahrzeugverzögerung eingehen. Die Kommunikation mit dem vorausfahrenden Fahrzeug kann dabei insbesondere als Car-2-Car-Kommunikation ausgebildet sein, aber auch über einen zentralen Rechner laufen.

Eine vorteilhafte Ausgestaltung der Erfindung ist dadurch gekennzeichnet, dass es sich bei der Umfeldsensorik um eine Sensorik zur Bestimmung der zeitlichen Änderung des Abstandes zum vorausfahrenden Fahrzeug handelt.

Eine vorteilhafte Ausgestaltung der Erfindung ist dadurch gekennzeichnet, dass es sich bei der wenigstens einen in das Bremsenregelungssystem des Kraftfahrzeugs eingehenden Größe um einen Minimalwert für den Reibwert des zum Zeitpunkt von dessen Ermittlung vom Vorderfahrzeug befahrenen Fahrbahnabschnittes handelt.

Weiter umfasst die Erfindung eine Vorrichtung, enthaltend Mittel, die zur Durchführung der erfindungsgemäßen Verfahren ausgestaltet sind. Dabei handelt es sich insbesondere um ein Steuergerät, in welchem der Programmcode zur Durchführung der erfindungsgemäßen Verfahren hinterlegt ist.

Die Zeichnung umfasst die Figuren 1 bis 5
Fig. 1 zeigt den zeitlichen Bremsdruckaufbau bei hohem vorliegendem Reibwert mit und ohne vorausfahrendes Fahrzeug.
Fig. 2 zeigt den zeitlichen Bremsdruckaufbau mit und ohne vorausfahrendes Fahrzeug, wobei das vorausfahrende Fahrzeug schwächer als in Fig. 1 bremst.
Fig.3 zeigt einen geschätzten bzw. angenommenen Reibwert in Abhängigkeit der mittels einer Umfeldsensorik ermittelten Verzögerung eines vorausfahrenden Fahrzeugs.
Fig.4 zeigt ein Blockdiagramm mit den Ein- und Ausgangsgrößen für die Längsstabilisierung des Fahrzeugs.
Fig. 5 zeigt den grundlegenden Ablauf des erfindungsgemäßen Verfahrens.

Im Bereich des automatisierten, hochautomatisierten und teilautomatisierten Fahrens eines Kraftfahrzeugs lässt sich im Normalbetrieb eine Fahrzeugstabilisierung über eine Einrichtung zur radindividuellen aktiven und passiven Bremsdruckmodulation wie beispielsweise einer Fahrdynamikregelung mitsamt zugehöriger Aktuatorik durchführen. Dieses für den Normalfall vorgesehene System wird als Primäraktuatorik bezeichnet.

Im Fall eines Ausfalls der Primäraktuatorik ist es erforderlich, dass eine sekundäre Stabilisierungsaktuatorik bzw. Sekundäraktuatorik zur Verfügung steht, welche zumindest eine Längsstabilisierung des Kraftfahrzeugs erlaubt. Dabei werden an die Sekundäraktuatorik folgende Erfordernisse gerichtet:
- die Einhaltung der Blockierreihenfolge muss gewährleistet sein, d.h. die Hinterachsräder dürfen erst blockieren, wenn die Räder der Vorderachse bereits blockieren,
- die Blockierdauer von Rädern darf eine vorgegebene zeitliche Dauer nicht überschreiten, um die Lenkbarkeit des Kraftfahrzeugs sicherzustellen und
- es muss die Möglichkeit eines aktiven bzw. fahrerunabhängigen Druckaufbaus zur Durchführung einer automatisierten Fahrzeugverzögerung gegeben sein.

Während des Fahrbetriebs mit funktionsfähiger Primäraktuatorik liegen in machen Fahrsituationen Informationen über den Reibwert der Fahrbahnoberfläche vor. Der Reibwert wird in diesen Fahrsituationen aus Raddrehzahldaten und weiteren Sensorinformationen ermittelt, welche der Primäraktuatorik zugeordnet sind.

Aus Sicherheitsgründen ist es empfehlenswert, die Sensordaten der Primäraktuatorik nicht für die Sekundäraktuatorik zu verwenden, denn bei einem Ausfall der Primäraktuatorik können deren Sensordaten entweder fehlen oder fehlerhaft sein. Dies führt jedoch dazu, dass bei Ausfall der Primäraktuatorik und Übergabe an die Sekundäraktuatorik zunächst kein ermittelter Reibwert für die Fahrbahnoberfläche zur Verfügung steht.

Hierbei gibt es jedoch eine Einschränkung: Da die Sekundäraktuatorik zumindest eine Längsstabilisierung des Fahrzeugs sicherstellen muss, muss für die Sekundäraktuatorik beispielsweise das Ausgangssignal eines nicht in die Primäraktuatorik integrierten Längsbeschleunigungssensors zur Verfügung stehen. Dazu kann die Sekundäraktuatorik z.B. auf den im Rahmen einer Airbagsteuerung verwendeten Längsbeschleunigungssensor zurückgreifen oder auf einen mit der Primäraktuatorik gemeinsamen Längsbeschleunigungssensor, dessen Signalverarbeitung jedoch nicht in der Primäraktuatorik stattfindet, so dass dieser Sensor auch bei deren Ausfall zur Verfügung steht. Alternativ ist es auch möglich, Raddrehzahlfühlerinformationen in der Sekundäraktuatorik zu verwenden, wenn die Signalerfassung und -auswertung der Raddrehzahlfühler nicht in die Primäraktuatorik integriert ist, d.h. wenn auch bei einem Ausfall der Primäraktuatorik zuverlässige Raddrehzahlinformationen zur Verfügung stehen.

Neben dem fehlenden Reibwert stehen bei der Übergabe auf die Sekundäraktuatorik auch die die Radzustände beschreibenden Größen wie z.B. die Raddrehzahlen nicht zur Verfügung. Jedoch ist es möglich, mit Hilfe einer Umfeldsensorik einen Minimalwert für eine durch Bremseingriffe der Sekundäraktuatorik erzeugbare Fahrzeugverzögerung abzuschätzen, ohne dass auf aktuelle Raddrehzahlen zurückgegriffen werden muss.

Unter Verwendung der mittels einer Umfeldsensorik ermittelten Längsverzögerung eines vorausfahrenden Fahrzeugs lässt sich ein Mindestwert bzw. Grenzwert für die realisierbare Verzögerung des eigenen Fahrzeugs abschätzen und abhängig davon der Bremsdruckaufbau bzw. Fahrzeugverzögerungsaufbau durch die Sekundäraktuatorik erfolgen. Insbesondere kann die Bremskraft mittels der Sekundäraktuatorik sehr rasch erhöht werden, bis der ermittelte Mindestwert für die Verzögerung erreicht ist. Das hat den zusätzlichen Vorteil, dass sich durch den raschen aktiven Verzögerungsaufbau der Abstand zum vorausfahrenden Fahrzeug möglichst wenig verkürzt.

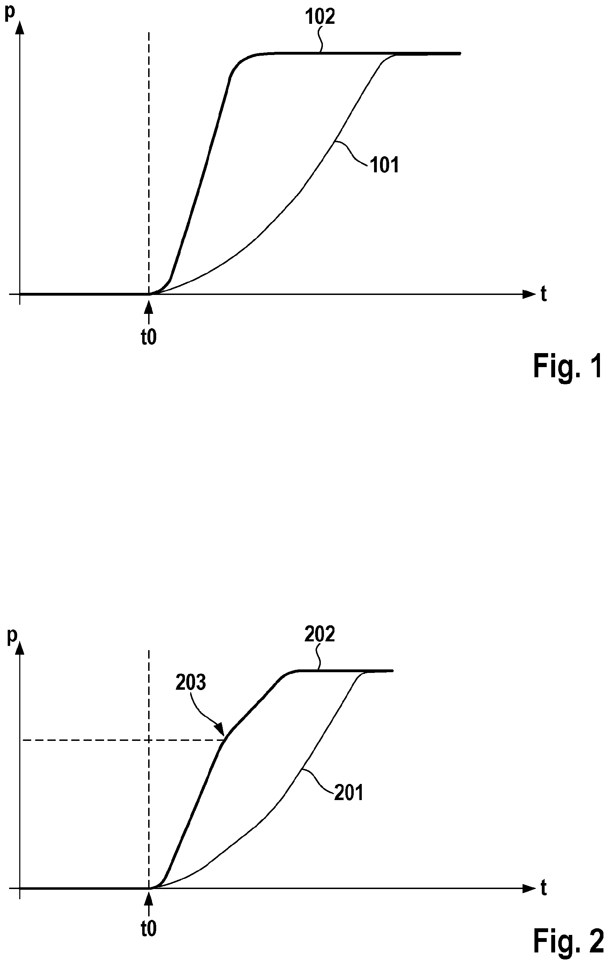

In Fig. 1 ist in Abszissenrichtung die Zeit t und in Ordinatenrichtung der Bremsdruck p für den Fall eines hydraulischen Bremssystems aufgetragen. Selbstverständlich eignet sich die Erfindung jedoch auch für pneumatische oder elektrische Bremssysteme. Zum Zeitpunkt t0 findet eine Verzögerungsanforderung an das Fahrzeug statt, dessen Primäraktuatorik ausgefallen ist. Diese Verzögerungsanforderung kann sowohl vom Fahrer über das Fahrpedal als auch fahrerunabhängig z.B. über eine automatische Notbremsfunktion generiert worden sein. Wird mittels der Umfeldsensorik kein vorausfahrendes Fahrzeug detektiert, dann findet wegen der fehlenden Raddrehzahlinformationen ein eher langsamer Bremsdruckaufbau statt, um ein Blockieren der Räder in jedem Fall zu vermeiden. Der Verzögerungsaufbau erfolgt deshalb mit langsamer Geschwindigkeit, da für die einkanalige Längsstabilisierung mit der Sekundäraktuatorik die Fahrzeugverhaltensrückmeldegrößen wie z.B. die Längsbeschleunigung weniger feinaufgelöst zur Verfügung stehen wie z.B. die Raddrehzahlfühlerinformationen. Weiter kann es bei der z.B. über Datenbussysteme erfolgenden Signalübertragung im Fahrzeug zu Verzugszeiten kommen. Um längere Instabilitäten der Räder und einen ungewollten Radschlupf zu vermeiden, wird der Bremskraft dann nur relativ langsam erhöht.

Dies ist anhand der Kurve 101 dargestellt. Wird jedoch ein vorausfahrendes Fahrzeug detektiert, welches eine hohe Fahrzeugverzögerung aufweist, dann kann darauf geschlossen werden, dass auch das eigene Fahrzeug stark abgebremst werden kann. Deshalb kann ein rascher Bremsdruckaufbau gemäß Kurve 102 stattfinden.

In Fig. 2 ist analog zu Fig. 1 ebenfalls in Abszissenrichtung die Zeit t und in Ordinatenrichtung der Bremsdruck p aufgetragen. Zum Zeitpunkt t0 findet wieder eine Verzögerungsanforderung an das Fahrzeug statt, dessen Primäraktuatorik ausgefallen ist. 201 kennzeichnet wiederum analog zu Fig. 1 den vorsichtigen Bremsdruckaufbau durch die Sekundäraktuatorik, wenn kein vorausfahrendes Fahrzeug vorhanden ist. 202 kennzeichnet den Bremsdruckaufbau bei Vorhandensein eines vorausfahrenden Fahrzeugs. Das vorausfahrende Fahrzeug weist eine geringere Verzögerung gegenüber dem in Fig. 1 betrachteten Fall auf, deshalb verläuft der anfängliche Bremsdruckaufbau langsamer als in Fig. 1. Am mit 203 gekennzeichneten Punkt erreicht die Verzögerung des Fahrzeugs diejenige des vorausfahrenden Fahrzeugs. Ein weiterer Bremsdruckaufbau muss nun langsamer erfolgen, um ein Blockieren der Räder zu verhindern.

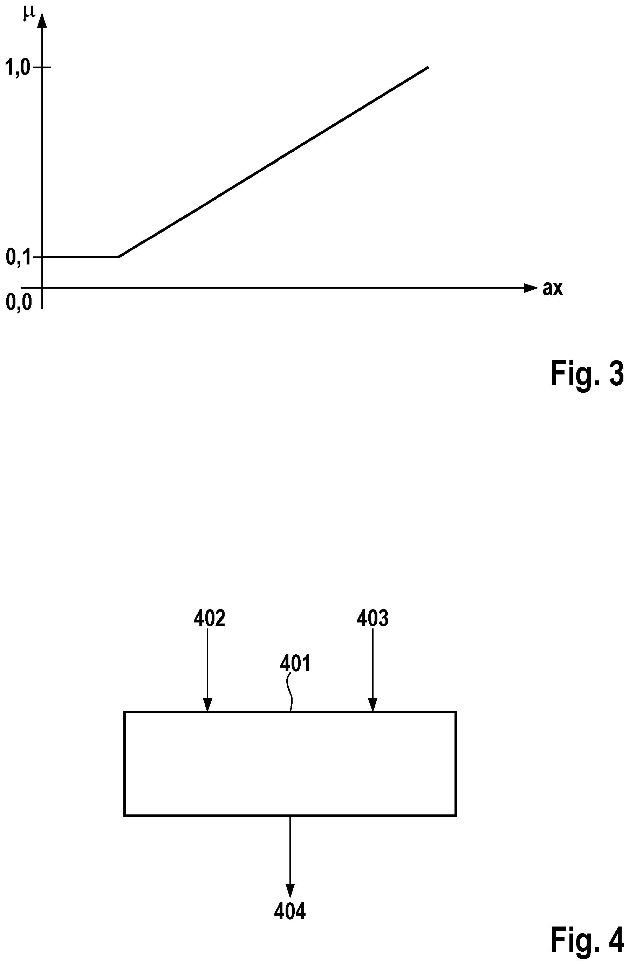

In Fig. 3 ist in Abszissenrichtung die Fahrzeuglängsverzögerung ax des vorausfahrenden Fahrzeugs und in Ordinatenrichtung ein Mindestwert für den Reibwert der Fahrbahnoberfläche dargestellt. Diese einfache Kennlinie kann z.B. dazu verwendet werden, um aus der mittels der Umfeldsensorik ermittelten Verzögerung ax des vorausfahrenden Fahrzeugs auf einen Reibwert der Fahrbahnoberfläche zu schließen.

In Fig. 4 sind die Ein- und Ausgangsgrößen der vorliegenden Erfindung anschaulich dargestellt. Block 401 kennzeichnet das Steuergerät der Sekundäraktuatorik, welche bei einem Ausfall der Primäraktuatorik zum Einsatz kommt. Bei den Eingangsgrößen kennzeichnen 402 die insbesondere von einem Längsbeschleunigungssensor ermittelten Fahrzeuglängsinformationen und 403 die mittels einer Umfeldsensorik ermittelten Verzögerungsinformationen eines vorausfahrenden Fahrzeugs. Abhängig davon erfolgt in Block die Ermittlung des Zieldrucks 404, welcher für die Druckmodulation verwendet wird. Hierbei handelt es sich insbesondere um eine einkanalige Druckmodulation, da die Sekundäraktuatorik nur für eine Längs- und nicht für eine Querstabilisierung des Fahrzeugs ausgelegt ist.

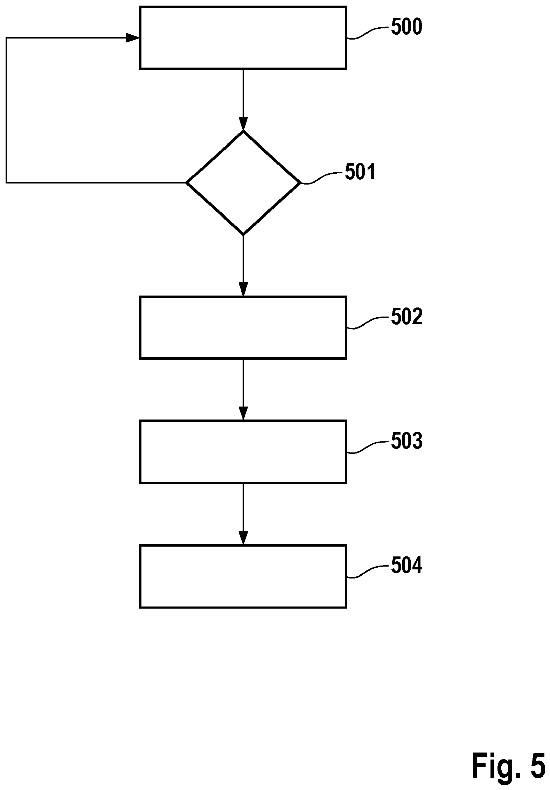

Der grundlegende Ablauf des erfindungsgemäßen Verfahrens ist in Fig. 5 dargestellt. Nach dem Start des Verfahrens in Block 500 wird in Block 501 mittels einer Umfeldsensorik überprüft, ob sich vor dem Fahrzeug ein vorausfahrendes Fahrzeug befindet. Ist dies nicht der Fall, dann wird zu Block 500 zurückgegangen. Ist dies jedoch der Fall, dann wird anschließend in Block 502 wenigstens eine die Längsdynamik des Vorderfahrzeugs beschreibende Vorderfahrzeuglängsdynamikgröße ermittelt. Anschließend wird in Block 503 abhängig von der Vorderfahrzeuglängsdynamikgröße wenigstens eine Größe ermittelt wird, welche in ein Bremsenregelungssystem des Kraftfahrzeugs eingeht. In Block 504 endet das Verfahren.

## Patentansprüche

1. Verfahren zur Längsdynamikregelung bei einem Kraftfahrzeug während eines autonomen Fahrvorgangs, bei dem
- mittels einer Umfeldsensorik das Vorhandensein eines dem Kraftfahrzeug vorausfahrenden Vorderfahrzeugs ermittelt wird (501)
- mittels der Umfeldsensorik wenigstens eine die Fahrzeuglängsdynamik des Vorderfahrzeugs beschreibende Vorderfahrzeuglängsdynamikgröße (ax) ermittelt wird (502) und
- abhängig von der Vorderfahrzeuglängsdynamikgröße wenigstens eine Größe ermittelt wird, welche in ein Bremsenregelungssystem des Kraftfahrzeugs eingeht (503),
wobei es sich bei der Vorderfahrzeuglängsdynamikgröße um die Längsverzögerung (ax) des Vorderfahrzeugs handelt,
wobei es sich bei der wenigstens einen in das Bremsenregelungssystem des Kraftfahrzeugs eingehenden Größe um einen Längsverzögerungsgrenzwert für die ohne ein Blockieren der Räder realisierbare Längsverzögerung des Kraftfahrzeug handelt und dass mittels des Bremsenregelungssystems ein fahrerunabhängiger Eingriff in die Längsdynamik des Kraftfahrzeugs derart durchgeführt wird, dass der Längsverzögerungsgrenzwert nicht überschritten wird,
**dadurch gekennzeichnet, dass** ein auf die Räder des Kraftfahrzeugs wirkendes Bremsmoment mit einer ersten Aufbaurate solange aufgebaut wird, bis die Verzögerung des Kraftfahrzeugs den ermittelten Längsverzögerungsgrenzwert erreicht und dass anschließend das Bremsmoment mit einer zweiten Aufbaurate weiter erhöht wird, wobei die zweite Aufbaurate kleiner als die erste Aufbaurate ist.

2. Verfahren nach Anspruch 1, **dadurch gekennzeichnet, dass** es sich bei dem mittels des Bremsenregelungssystems durchgeführten fahrerunabhängigen Eingriff um eine zum Fahrzeugstillstand führende Bremsung handelt.

3. Verfahren nach Anspruch 1, **dadurch gekennzeichnet, dass** es sich bei dem Bremsenregelungssystem des Kraftfahrzeugs um ein für einen Notbetrieb vorgesehenes sekundäres Bremsenregelungssystem handelt, welches aktiviert wird, wenn ein für den Normalbetrieb des Kraftfahrzeugs vorgesehenes Bremsenregelungssystem ausfällt.

4. Verfahren nach Anspruch 3, **dadurch gekennzeichnet, dass** es sich die dem sekundären Bremsenregelungssystem um ein einkanaliges System handelt.

5. Verfahren nach Anspruch 1, **dadurch gekennzeichnet, dass** es sich bei der Umfeldsensorik um eine Video- oder Radarsensorik handelt.

6. Verfahren nach Anspruch 1, **dadurch gekennzeichnet, dass** es sich bei der Umfeldsensorik um eine Sensorik handelt, welche von dem vorausfahrenden Fahrzeug auf drahtlosem Wege Informationen über dessen aktuelle Fahrzeugverzögerung oder dessen aktuelle Position empfängt.

7. Verfahren nach Anspruch 1, **dadurch gekennzeichnet, dass** es sich bei der Umfeldsensorik um eine Sensorik zur Bestimmung der zeitlichen Änderung des Abstandes zum vorausfahrenden Fahrzeug handelt.

8. Verfahren nach Anspruch 1, **dadurch gekennzeichnet, dass** es sich bei der wenigstens einen in das Bremsenregelungssystem des Kraftfahrzeugs eingehenden Größe um einen Minimalwert für den Reibwert (µ) des zum Zeitpunkt von dessen Ermittlung vom Vorderfahrzeug befahrenen Fahrbahnabschnittes handelt.

9. Vorrichtung, enthaltend Mittel, die zur Durchführung der erfindungsgemäßen Verfahren ausgestaltet sind.

## Claims

1. Method for longitudinal-dynamics control in a motor vehicle during an autonomous driving operation, in which,
- by means of a driving environment sensor system, the presence of a vehicle in front driving ahead of the motor vehicle is determined (501),
- by means of the driving environment sensor system, at least one vehicle-in-front longitudinal dynamics variable (ax) describing the longitudinal dynamics of the vehicle in front is determined (502) and,
- depending on the vehicle-in-front longitudinal dynamics variable, at least one variable is determined and is entered into a brake control system of the motorvehicle (503),
the vehicle-in-front longitudinal dynamics variable being the longitudinal deceleration (ax) of the vehicle in front,
the at least one variable that is entered into the brake control system of the motor vehicle being a longitudinal deceleration limit value for the longitudinal deceleration of the motor vehicle attainable without locking the wheels, and a driver-independent intervention in the longitudinal dynamics of the motor vehicle being carried out by means of the brake control system in such a way that the longitudinal deceleration limit value is not exceeded,
**characterized in that** a braking torque acting on the wheels of the motor vehicle is built up at a first building-up rate until the deceleration of the motor vehicle reaches the determined longitudinal deceleration limit value and **in that** the braking torque is subsequently increased further at a second building-up rate, the second building-up rate being less than the first building-up rate.

2. Method according to Claim 1, **characterized in that** the driver-independent intervention carried out by means of the brake control system is braking that brings the vehicle to a standstill.

3. Method according to Claim 1, **characterized in that** the brake control system of the motor vehicle is a secondary brake control system, which is provided for emergency operation and is activated if a brake control system provided for normal operation of the motor vehicle fails.

4. Method according to Claim 3, **characterized in that** the secondary brake control system is a one-channel system.

5. Method according to Claim 1, **characterized in that** the driving environment sensor system is a video or radar sensor system.

6. Method according to Claim 1, **characterized in that** the driving environment sensor system is a sensor system which receives information wirelessly from the vehicle driving ahead about its current vehicle deceleration or its current position.

7. Method according to Claim 1, **characterized in that** the driving environment sensor system is a sensor system for determining the change over time in the distance from the vehicle driving ahead.

8. Method according to Claim 1, **characterized in that** the at least one variable that is entered into the brake control system of the motor vehicle is a minimum value for the coefficient of friction (µ) of the section on road being driven along by the vehicle in front at the time of its determination.

9. Device including means designed for carrying out the method according to the invention.

## Revendications

1. Procédé de régulation de dynamique longitudinale pour un véhicule automobile pendant un processus de conduite autonome, dans lequel
- la présence d'un véhicule avant qui précède le véhicule automobile est établie (501) au moyen d'un système de capteurs périphériques,
- au moins une grandeur de dynamique longitudinale de véhicule avant (ax) décrivant la dynamique longitudinale de véhicule du véhicule avant est établie (502) au moyen du système de capteurs périphériques, et
- en fonction de la grandeur de dynamique longitudinale de véhicule avant, au moins une grandeur est établie qui entre (503) dans un système de régulation de freins du véhicule automobile,
la grandeur de dynamique longitudinale de véhicule avant étant la décélération longitudinale (ax) du véhicule avant,
ladite au moins une grandeur entrant dans le système de régulation de freins du véhicule automobile étant une valeur limite de décélération longitudinale pour la décélération longitudinale du véhicule automobile réalisable sans bloquer les roues, et le système de régulation de freins effectuant une intervention indépendante du conducteur sur la dynamique longitudinale du véhicule automobile de telle sorte que la valeur limite de décélération longitudinale ne soit pas dépassée,
**caractérisé en ce qu'**un couple de freinage agissant sur les roues du véhicule automobile est augmenté à un premier taux d'augmentation jusqu'à ce que la décélération du véhicule automobile atteigne la valeur limite de décélération longitudinale déterminée, et **en ce qu'**ensuite le couple de freinage est encore relevé à un deuxième taux d'augmentation, le deuxième taux d'augmentation étant inférieur au premier taux d'augmentation.

2. Procédé selon la revendication 1, **caractérisé en ce que** l'intervention indépendante du conducteur, effectuée au moyen du système de régulation de freins, est un freinage aboutissant à l'arrêt du véhicule.

3. Procédé selon la revendication 1, **caractérisé en ce que** le système de régulation de freins du véhicule automobile est un système de régulation de freins secondaire, prévu pour un fonctionnement de secours, qui est activé si un système de régulation de freins prévu pour le fonctionnement normal du véhicule automobile est défaillant.

4. Procédé selon la revendication 3, **caractérisé en ce que** le système de régulation de freins secondaire est un système à une seule voie.

5. Procédé selon la revendication 1, **caractérisé en ce que** le système de capteurs périphériques est un système de capteurs vidéo ou radar.

6. Procédé selon la revendication 1, **caractérisé en ce que** le système de capteurs périphériques est un système de capteurs qui reçoit sans fil du véhicule qui précède des informations concernant la décélération de véhicule actuelle de celui-ci ou la position actuelle de celui-ci.

7. Procédé selon la revendication 1, **caractérisé en ce que** le système de capteurs périphériques est un système de capteurs pour déterminer la variation temporelle de la distance par rapport au véhicule qui précède.

8. Procédé selon la revendication 1, **caractérisé en ce que** la grandeur entrant dans le système de régulation de freins du véhicule automobile est une valeur minimale pour le coefficient de friction (µ) de la section de chaussée parcourue par le véhicule qui précède au moment où celui-ci est établi.

9. Dispositif, comprenant des moyens qui sont configurés pour effectuer le procédé selon l'invention.
